# EUROPÄISCHE PATENTSCHRIFT

(11) **EP 1 783 151 B1**
(45) Veröffentlichungstag und Bekanntmachung des Hinweises auf die Patenterteilung: **13.05.2009**
(21) Anmeldenummer: 06022202.3
(22) Anmeldetag: 24.10.2006
(51) Int. Cl.: C08G 18/10, C08G 18/62, C08G 18/76, C09D 175/04

(54) **MDI-Prepolymere und darauf basierende Lacke mit verbesserten Eigenschaften, ein Verfahren zu ihrer Herstellung und ihre Verwendung**
MDI based prepolymers and lacquers with improved properties containing the same, process for their preparation and their use
Prépolymères MDI et vernis contenant ceux-ci et ayant des propriétés améliorées, procédé de préparation de ces prépolymères et leur utilisation

(30) Priorität: 05.11.2005 DE 102005052813
(43) Veröffentlichungstag der Anmeldung: 09.05.2007
(73) Patentinhaber: Bayer MaterialScience AG, 51368 Leverkusen (DE)
(72) Erfinder: Köhler, Burkhard, Dr., 51373 Leverkusen (DE); Bäker, Thomas, 50739 Köln (DE); Homann, Malte, Dr., 51519 Odenthal (DE)

(56) Entgegenhaltungen:
- EP-A1- 1 153 997
- EP-A2- 0 796 880
- US-A- 4 855 359

## Beschreibung

Die vorliegende Erfindung betrifft die Herstellung neuer isocyanatfunktioneller Prepolymere aus Styrol-Allylalkohol-Copolymeren und MDI, sowie deren Verwendung als feuchtigkeitshärtende Polyurethanbeschichtungen für den Korrosionsschutz.

MDI-Prepolymere auf Basis von Polypropylenoxiden werden zur Korrosionsschutz-Beschichtung von Stahl eingesetzt.

Die Herstellung von Styrol-Allylalkohol-Copolymeren oder deren Alkoxylierungsprodukten und deren Vernetzung mit (blockierten) Isocyanaten ist schon lange bekannt. Sie können gemäß US-A-3,969,569 und US-A- 4,144,215 hergestellt werden. Nach der Lehre von US-A- 3,969,569 müssen solche Lacke aus blockierten Isocyanaten und Styrol-Allylalkohol-Copolymeren jedoch unter anderem wegen der für die Vernetzung notwendigen Deblockierung der NCO-Gruppen bei hohen Temperaturen von über 225°C eingebrannt werden. Mit nicht blockierten Isocyanaten sind Styrol-Allylalkol-Copolymere außerdem laut US-A- 4,144,215 nur als Zwei-Komponentensystem applizierbar.

Aufgabe der vorliegenden Erfmdung war es nun, ein Lacksystem zu finden, welches die guten Eigenschaften, wie z. B. die Hydrophobie der Styrol-Allylalkohol-Copolymer-PU-Lacke aufweist, aber als Ein-Komponentensystem applizierbar und bei Raumtemperatur härtbar ist.

Es wurde nun gefunden, dass sich aus Styrol-Allylalkohol-Copolymeren mit MDI im Äquivalentverhältnis von OH zu NCO-Gruppen von 1:≥2 Prepolymere herstellen lassen, aus denen feuchtigkeitshärtende Lacke mit guten Korrosionsschutzeigenschaften auf kritischen Untergründen erhalten werden können.

Gegenstand der Erfindung ist daher ein Verfahren zur Herstellung von PUR-Prepolymeren, bei dem OH-funktionelle Copolymere aus Vinylaromaten und Allylalkohol mit Methylendiphenyldiisocyanat (MDI) umgesetzt werden, wobei das Äquivalentverhältnis von OH zu NCO-Gruppen 1:≥2 beträgt.

Bevorzugt beträgt das OH zu NCO Äquivalentverhältnis 1:2 bis 1:50, besonders bevorzugt 1:2 bis 1:20.

Ein weiterer Gegenstand sind die erfindungsgemäß erhältlichen Prepolymere sowie Lacksysteme basierend auf diesen Prepolymeren.

Bevorzugt erfolgt die Herstellung der erfindungsgemäßen Prepolymere auf folgende Weise: Über einen Zeitraum von 0,5 bis 8 h wird eine Lösung des Copolymeren von Vinylaromaten und Allylalkohol in der 0,3 bis 3 fachen Menge eines gegenüber Isocyanaten nicht reaktiven Lösungsmittels bezogen auf das Copolymer, zu MDI in einem Äquivalentverhältnis von (OH-Gruppen zu NCO-Gruppen) 1:2 bis 1:20 zudosiert.

Copolymere aus Vinylaromaten und Allylalkohol im Sinne der Erfindung sind z.B. Copolymere aus Allylalkohol und Styrol, 3-Methylstyrol, 4-Methylstyrol, alpha-Methylstyrol, 4-tert-Butylstyrol, 4-Chlorstyrol, 3-Chlorstyrol, 4-Bromstyrol, 3-Bromstyrol, 2-Trifluormethylstyrol, 3-Trifluormethylstyrol, 4-Trifluormethylstyrol, 4-Cyanstyrol, 4-Vinylbenzoesäurealkylestern, vorzugsweise aus Allylalkohol und Styrol.

Die Copolymeren aus Vinylaromaten und Allylalkohol können durch radikalische Copolymerisation der Vinylaromaten mit Allylalkohol hergestellt werden.

Solche Copolymere aus Vinylaromaten und Allylalkohol haben vorzugsweise einen OH-Gehalt von 2 bis 10 Gew.-%, besonders bevorzugt von 3 bis 8,5 Gew.-% , eine bevorzugte Molmasse (Zahlenmittel) von 800 bis 5000 g/mol und eine bevorzugte Molmasse (Gewichtsmittel) von 1500 bis 11000 g/mol.

Die Copolymere können grundsätzlich auch durch Reduktion von Copolymeren des Vinylaromaten und Alkylacrylaten oder Acrylsäure- oder Maleinsäurederivaten, wie Maleinsäureanhydrid, oder Fumarsäurederivaten mit Metallhydriden, wie Lithiumalanat, hergestellt werden, jedoch ist die radikalische Copolymerisation mit Allylalkohol der bevorzugte Weg.

Als Methylendiphenyldiisocyanat (MDI) wird typischerweise eine Isomerenmischung mit mindestens 80 Gew.-% der monomeren Diisocyanat-Isomere 2,2'-, 2,4'- und 4,4'-MDI eingesetzt.

Bevorzugt ist eine Isomerenmischung mit mindestens 90 Gew.-% der monomeren Diisocyanat-Isomere 2,2'-, 2,4'- und 4,4'-MDI, besonders bevorzugt eine Isomerenmischung mit mindestens 95 Gew.-% der monomeren Diisocyanat-Isomere 2,2'-, 2,4'- und 4,4'-MDI und ganz besonders bevorzugt eine Isomerenmischung mit mindestens 98 Gew.-% der monomeren Diisocyanat-Isomere 2,2'-, 2,4'- und 4,4'-MDI.

Bevorzugt werden Isomerengemische der vorstehend genannten Art eingesetzt, bei denen die Summe der monomeren Diisocyanat-Isomere zu mindestens 90 Gew.-% aus 4,4'-MDI und 2,4'-MDI, besonders bevorzugt bei denen die Summe der monomeren Diisocyanat-Isomere zu mindestens 95 Gew.-% und insbesondere bevorzugt zu mindestens 98 Gew.-% aus 4,4'-MDI und 2,4'-MDI bestehen.

Die eingesetzten Isomerengemische können bis zu 25 Gew.- % MDI-Oligomere (bestehend aus mindestens drei über Methylenbrücken verbundenen Aromaten, wobei jeder Aromat eine Isocyanatgruppe trägt), vorzugsweise bis zu 15 Gew.- % MDI-Oligomere, besonders bevorzugt bis zu 5 Gew.- % MDI-Oligomere und ganz besonders bevorzugt bis zu 2 Gew.- % MDI-Oligomere enthalten.

Gegenüber Isocyanaten nicht reaktive Lösungsmittel im Sinne der Erfindung sind aliphatische, aromatische oder araliphatische Lösungsmittel, die keine cerivitinov-aktiven Wasserstoffatome enthalten, aber vorzugsweise Ethergruppen und/oder Estergruppen und/oder Halogenatome und/oder Nitrilgruppen und/oder Amidgruppen enthalten. Geeignete Lösungsmittel sind z.B. Methoxypropylacetat, Methoxyethylacetat, Ethylenglykoldiacetat, Propylenglykoldiacetat, Glyme, Diglyme, Dioxan, Tetrahydrofuran, Dioxolan, tert-Butylmethylether, Ethylacetat, Chloroform, Methylenchlorid, Chlorbenzol, o-Dichlorbenzol, Anisol, 1,2-Dimethoxybenzol, Phenylacetat, N-Methyl-2-pyrrolidon, Dimethylformamid, N,N-Dimethylacetamid, Dimethylsulfoxid, Acetonitril, Phenoxyethylacetat, vorzugsweise Ether- und Estergruppenhaltige Lösungsmittel, wie Methoxypropylacetat.

Überschüssiges MDI kann nach der Prepolymerbildung durch Vakuum-Destillation, vorzugsweise Dünnschichtdestillation, ganz oder teilweise abdestilliert werden.

Ferner sind Gegenstand der Erfindung feuchtigkeitshärtende Lacke enthaltend die erfindungsgemäßen Prepolymere und Bindemittel, wobei der Gehalt der Prepolymere bevorzugt mindestens 50 Gew.-%, besonders bevorzugt 60 bis 90 Gew.-%, bezogen auf die Summe aus Prepolymer und Bindemittel beträgt.

Diese feuchtigkeitshärtenden Lacke sind als Einkomponentensysteme applizierbar.

Die feuchtigkeitshärtenden Lacke können als zusätzliche Bindemittel andere Polyisocyanate oder isocyanatfunktionelle Prepolymere aus Polyalkylenoxiden und Polyisocyanaten, vorzugsweise Polypropylenoxiden mit OH-Funktionalitäten von 2 bis 4 und Molmassen (Zahlenmittel) von 400 bis 6000 g/mol und aromatischen Polyisocyanaten, wie TDI, TDI-Trimerisaten, TDI-Addukten und MDI enthalten.

Weitere Bestandteile der Lacke können Pigmente, aktive Rostschutzpigmente, Korrosionsinhibitoren, Füllstoffe, Füllstoffe mit Barrier-Wirkung (plättchenförmige Schichtsilikate oder Schichtaluminosilikate, Graphit oder Aluminiumplättchen) und Nanofüllstoffe (wie Tone und Aluminiumsilikate) sein.

Des weiteren können Katalysatoren (Zinnverbindungen, Amine, Amidine, Guanidine, Zinkverbindungen, Cobaltverbindungen, Wismutverbindungen, Lithiumsalze, wie z.B. Lithiummolybdat, Magnesiumsalze, Calciumsalze), und Trockenmittel zur Erhöhung der Lagerstabilität, wie Tosylisocyanat, reaktive aromatische Isocyanate oder Orthoformiate, enthalten sein.

Die Lacke enthalten bezogen auf Festsubstanz bevorzugt mindestens 5 bis 100 Gew.-% nicht isocyanatreaktive Lösungsmittel.

Die Härtung der Lacke erfolgt typischerweise bei einer Temperatur von 0 bis 80°C, bevorzugt bei einer Temperatur von 10 bis 70 °C, besonders bevorzugt bei einer Temperatur von 15 bis 50°C.

Die Lacke dienen vorzugsweise zur Beschichtung von kritischen Stahluntergründen, die nur durch einfache Maßnahmen entrostet sind (Oberflächenvorbehandlung ST2 gemäß ISO 12944-4).

Dort zeichnen sie sich durch einen gegenüber Lacken, die nach dem oben genannten Stand der Technik erhalten wurden, verbesserten Korrosionsschutz aus.

### Beispiele:

### Meßmethoden:

- Viskosität:: Rotationsviskosimeter VT 550 der Firma Haake GmbH, Karlsruhe, DE, MV-DIN Becher bei Viskosität < 10.000 mPa·s/23 °C, SV-DIN Becher bei Viskosität > 10.000 mPa·s/23 °C
- NCO-Gehalt:: Rücktitration mit 1 mol/l HCl nach Reaktion mit einem Dibutylaminüberschuss in Aceton, Grundlage DIN EN ISO 11909

Im folgenden beziehen sich alle Prozentangaben, soweit nichts anders vermerkt, auf das Gewicht.

### Herstellung der erfindungsgemäßen Prepolymere (Beispiele 1-6)

### Allgemeine Arbeitsvorschrift:

Bei 90°C wurden in 3 Stunden zu 1000 g einer 1:1-Mischung von 2,4'- und 4,4'-MDI, die Lösung des Styrol-Allylalkohol-Copolymeren (SAA) in Methoxypropylacetat (MPA) getropft und bis zum Erreichen des konstanten NCO-Wert nachrühren gelassen.

Als SAA wurde

SAA-100^{®} von der Fa. Lyondell AG, US mit einem OH-Gehalt von 6,4Gew.-% und einer Molmasse Mₙ von 1400 g/mol und M_{w} von 3100 g/mol und

SAA-101^{®} von der Fa. Lyondell AG, US mit einem OH-Gehalt von 7,7Gew.-% und einer Molmasse Mₙ von 1200 g/mol und M_{w} von 2600 g/mol eingesetzt.

| **Beispiel** | **SAA-101 [g]** | **SAA-100 [g]** | **MPA [g]** | **Viskosität [mPas]** | **NCO-Gehalt [%]** |
|---|---|---|---|---|---|
| **1** | 250 | | 350 | 430 | 18,3 |
| **2** | 300 | | 420 | 1060 | 15,3 |
| **3** | 350 | | 490 | 3750 | 13,5 |
| **4** | | 250 | 350 | 280 | 17,5 |
| **5** | | 300 | 420 | 817 | 15,7 |
| **6** | | 350 | 490 | 2180 | 13,9 |

### Lackformulierung (Beispiele 7-12, Vergleichsbeispiel)

### Allgemeine Arbeitsvorschrift:

Als Bindemittel wurde folgende Mischung eingesetzt:

| | |
|---|---|
| Prepolymer, hergestellt nach einem der Beispiele 1-6 | 155,4g |
| Desmodur^{®} E14 (TDI-Polypropylenoxid-Prepolymer mit einem NCO-Gehalt von 3,3% [Bayer MaterialScience AG, Leverkusen, DE]) zur Elastifizierung | 54,4g |
| Bayferrox ^{®} 130 BM (Eisenoxidpigment, der Fa. Lanxess, Leverkusen, DE) | 44,5g |
| Heucophos CHP^{®} (Calciumhydrogenorthophosphat, aktives Rostschutzpigment, der Fa. Heubach AG, Langelsheim, DE) | 58,9g |
| Talkum ST 30 ^{®} (Füllstoff, der Fa Luzenac AG, Paris, FR) | 64,3g |
| Disperbyk ^{®} 180 (Dispergieradditiv, Fa. Byk Chemie AG, Wesel, DE) | 3,5g |
| Byk^{®} A 530 (Entlüfter, Fa. Byk Chemie AG, Wesel, DE) | 1,6g |
| Zusatzmittel TI ^{®} Trocknungsmittel, Tosylisocyanat, Fa. Borchers AG, Langenfeld, DE) | 27,2g |
| Zusatzmittel OF ^{®} (Trocknungsmittel, Triethylorthoformiat, Fa. Borchers AG, Langenfeld, DE) | 13,0g |

Es wurden der Gesamtrezeptur 0,2 g Metatin (Dibutylzinnacetylacetonat) [Acima Buchs, Schweiz} zugegeben und durch dreifaches Streichen mit einem Pinsel in einer ungefähren Schichtdicke von 150µm auf ein ST2-vorbehandeltes Stahlblech appliziert. Die Beschichtungen wurden einen Tag bei Raumtemperatur gehärtet (ST2-Vorbehandlung, Reinigung mit einer Drahtbürste gemäß ISO 12944-4).

Die Prüfung erfolgte durch einen Salzsprühtest (Ritzung und Bewitterung) nach SA DIN 53167. Der Test wurde beendet, wenn eine Unterwanderung am Ritz und/oder starke Durchrostung zu beobachten war.

| **Beispiel** | **Prepolymer** | **Zeit bis zum Testende [Wochen]** |
|---|---|---|
| **7** | 1 | 5 |
| **8** | 2 | 6 |
| **9** | 3 | 8 |
| **10** | 4 | 5 |
| **11** | 5 | 8 |
| **12** | 6 | 5 |
| **Vergleich** | Handelsüblicher Prepolymer für feuchtigkeitshärtende PU-Lacke: Desmodur ^{®} E23 (MDI auf Polypropylenoxiden, der Firma Bayer MaterialScience AG) | 2 |

Die erfindungsgemäßen Prepolymere ergeben einen viel wirksameren Korrosionsschutz als für diesen Zweck bisher eingesetzte Prepolymere nach dem oben genannten Stand der Technik.

## Patentansprüche

1. Verfahren zur Herstellung von PUR-Prepolymeren, bei dem OH-funktionelle Copolymere aus Vinylaromaten und Allylalkohol mit Methylendiphenyldiisocyanat (MDI) umgesetzt werden, wobei das Äquivalentverhältnis von OH zu NCO-Gruppen 1: ≥2 beträgt.

2. Verfahren gemäß Anspruch 1, **dadurch gekennzeichnet, dass** über einen Zeitraum von 0,5 bis 8 h eine Lösung des Copolymeren von Vinylaromaten und Allylalkohol in der 0,3 bis 3-fachen Menge eines gegenüber Isocyanaten nicht reaktiven Lösungsmittels bezogen auf das Copolymer, zu MDI in einem Äquivalentverhältnis von (OH-Gruppen zu NCO-Gruppen) 1:2 bis 1:20 zudosiert wird.

3. Verfahren gemäß Anspruch 1 oder 2, **dadurch gekennzeichnet, dass** als Vinylaromaten Styrol, 3-Methylstyrol, 4-Methylstyrol, alpha-Methylstyrol, 4-tert-Butylstyrol, 4-Chlorstyrol, 3-Chlorstyrol, 4-Bromstyrol, 3-Bromstyrol, 2-Trifluormethylstyrol, 3-Trifluormethylstyrol, 4-Trifluormethylstyrol, 4-Cyanstyrol und/oder 4-Vinylbenzoesäurealkylestern eingesetzt werden.

4. Prepolymere erhältlich nach dem Verfahren gemäß einem der Anspräche 1 bis 3.

5. Feuchtigkeitshärtende Lacke enthaltend Prepolymere gemäß Anspruch 4.

6. Feuchtigkeitshärtende Lacke gemäß Anspruch 5, **dadurch gekennzeichnet, dass** sie ferner Pigmente, aktive Rostschutzpigmente, Korrosionsinhibitoren, Füllstoffe, Trockenmittel und/oder Katalysatoren enthalten.

7. Feuchtigkeitshärtende Lacke gemäß Anspruch 5 oder 6, **dadurch gekennzeichnet, dass** sie als zusätzliche Bindemittel weitere Polyisocyanate oder isocyanatfunktionelle Prepolymere enthalten.

8. Feuchtigkeitshärtende Lacke gemäß Anspruch 6, **dadurch gekennzeichnet, dass** das Trockenmittel auf Tosylisocyanat, reaktiven aromatischen Isocyanaten und/oder Orthoformiaten basiert.

9. Verfahren zur Herstellung von Beschichtungen, bei dem ein feuchtigkeitshärtender Lack gemäß einem der Ansprüche 5 bis 8 aufgetragen und bei einer Temperatur von 0 bis 80°C ausgehärtet wird.

10. Beschichtungen erhältlich unter Verwendung von Prepolymeren gemäß Anspruch 4.

11. Substrate beschichtet mit Beschichtungen gemäß Anspruch 10.

## Claims

1. Process for the preparation of PUR prepolymers, in which OH functional copolymers of vinyl aromatic compounds and allyl alcohol are reacted with methylenediphenyl diisocyanate (MDI), the equivalent ratio of OH to NCO groups being 1 : ≥2.

2. Process according to claim 1, **characterised in that**, over a period of from 0.5 to 8 hours, a solution of the copolymer of vinyl aromatic compounds and allyl alcohol in from 0.3 to 3 times the amount, based on the copolymer, of a solvent that is not reactive towards isocyanates is added to MDI in an equivalent ratio of (OH groups to NCO groups) of from 1 : 2 to 1 : 20.

3. Process according to claim 1 or 2, **characterised in that** there are used as the vinyl aromatic compounds styrene, 3-methylstyrene, 4-methylstyrene, alphamethylstyrene, 4-tert-butylstyrene, 4-chlorostyrene, 3-chlorostyrene, 4-bromostyrene, 3-bromostyrene, 2-trifluoromethylstyrene, 3-trifluoromethylstyrene, 4-trifluoromethylstyrene, 4-cyanostyrene and/or 4-vinylbenzoic acid alkyl esters.

4. Prepolymers obtainable by the process according to any one of claims 1 to 3.

5. Moisture-curing lacquers comprising prepolymers according to claim 4.

6. Moisture-curing lacquers according to claim 5, **characterised in that** they further comprise pigments, active anti-rust pigments, corrosion inhibitors, fillers, drying agents and/or catalysts.

7. Moisture-curing lacquers according to claim 5 or 6, **characterised in that** they comprise as additional binders further polyisocyanates or isocyanate-functional prepolymers.

8. Moisture-curing lacquers according to claim 6, **characterised in that** the drying agent is based on tosyl isocyanate, reactive aromatic isocyanates and/or orthoformates.

9. Process for the production of coatings, in which a moisture-curing lacquer according to any one of claims 5 to 8 is applied and cured at a temperature of from 0 to 80°C.

10. Coatings obtainable using prepolymers according to claim 4.

11. Substrates coated with coatings according to claim 10.

## Revendications

1. Procédé pour produire des prépolymères de PUR dans lequel des copolymère OH-fonctionnels de vinylaromatiques et d'alcool allylique sont mis à réagir avec le diisocyanate de méthylènediphényle (MDI) où le rapport d'équivalents des groupes OH au groupes NCO est 1:≥2.

2. Procédé selon la revendication 1 **caractérisé en ce que**, pendant une durée de 0,5 à 8 h, une solution du copolymère de vinylaromatiques et d'alcool allylique dans la quantité égale à 0,3 à 3 fois d'un solvant non réactif à l'égard des isocyanates par rapport au copolymère est ajoutée au MDI dans un rapport d'équivalents de (groupes OH aux groupes NCO) de 1:2 à 1:20.

3. Procédé selon la revendication 1 ou 2 **caractérisé en ce que** le styrène, le 3-méthylstyrène, le 4-méthylstyrène, l'alpha-méthylstyrène, le 4-tert-butylstyrène, le 4-chlorostyrène, le 3-chlorostyrène, le 4-bromostyrène, le 3-bromostyrène, le 2-trifluorométhylstyrène, le 3-trifluorométhylstyrène, le 4-trifluorométhylstyrène, le 4-cyanostyrène et/ou des alkylesters d'acide 4-vinylbenzoïque sont utilisés comme vinylaromatiques.

4. Prépolymères pouvant être obtenus selon le procédé selon l'une des revendications 1 à 3.

5. Peintures durcissant à l'humidité contenant des prépolymères selon la revendication 4.

6. Peintures durcissant à l'humidité selon la revendication 5 **caractérisées en ce qu'**elles contiennent en outre des pigments, des pigments antirouille actifs, des inhibiteurs de corrosion, des charges, des siccatifs et/ou des catalyseurs.

7. Peintures durcissant à l'humidité selon la revendication 5 ou 6 **caractérisées en ce qu'**elles contiennent comme liants supplémentaires d'autres polyisocyanates ou prépolymères isocyanato-fonctionnels.

8. Peintures durcissant à l'humidité selon la revendication 6 **caractérisées en ce que** le siccatif est basé sur l'isocyanate de tosyle, des isocyanates aromatiques réactifs et/ou des orthoformiates.

9. Procédé de production de revêtements dans lequel une peinture durcissant à l'humidité selon l'une des revendications 5 à 8 est appliquée et est durcie à une température de 0 à 80°C.

10. Revêtements pouvant être obtenus au moyen de prépolymères selon la revendication 4.

11. Substrats revêtus avec des revêtements selon la revendication 10.
